Europäisches Patentamt

European Patent Office

Office européen des brevets

(11) Publication number: **0 139 022**
**A1**

(12) # EUROPEAN PATENT APPLICATION
published in accordance with Art. 158(3) EPC

(21) Application number: **84901413.9**

(22) Date of filing: **04.04.84**

Data of the international application taken as a basis:

(86) International application number:
**PCT/JP84/00164**

(87) International publication number:
**WO84/03965 (11.10.84 84/24)**

(51) Int. Cl.⁴: **G 06 F 3/00**

(30) Priority: **07.04.83 JP 61318/83**

(43) Date of publication of application:
**02.05.85 Bulletin 85/18**

(84) Designated Contracting States:
**DE FR GB**

(71) Applicant: **FANUC LTD**
**5-1, Asahigaoka 3-chome Hino-shi**
**Tokyo 191(JP)**

(72) Inventor: **KISHI, Hajimu**
**Hino Hirayamadai jutaku 1104 6-7-8, Asahigaoka**
**Hino-shi Tokyo 191(JP)**

(72) Inventor: **TANAKA, Kunio**
**5-8-13, Tamakawa-cho Akishima-shi**
**Tokyo 196(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) METHOD OF CONTROLLING DATA TRANSFER.

(57) In this method of controlling data transfer, data is input or output through interface circuits (6 to 9) between a device provided with a processor (10) and external devices (PPR, PRT, BCA, TAB) connected to connectors (CN1 to CN4), respectively, of the device. The method comprises a step of inputting through a control panel (4) data including at least the relationships between the connectors and the external devices connected thereto and the corresponding data transfer speeds required when data is transferred between those external devices and the processor, and storing this data in a memory (13); a step of identifying the connector of an external device which will transfer data between itself and the processor, using the data stored in the memory, and inputting the data transfer speed corresponding to the external device to an interface circuit connected to that connector; and a step of generating pulses of a frequency dictated by the input data transfer speed from a baud rate generator incorporated in the interface circuit, and transferring data between the processor and the external device in synchronism with these pulses.

FIG. 3

EP 0 139 022 A1

-1-

## DESCRIPTION

## DATA TRANSFER CONTROL METHOD

## Technical Field

This invention relates to a data transfer control method whereby a data transmission rate and data transfer format are entered from an operator's panel and a data transfer is executed with external equipment based on these data.

## Background Art

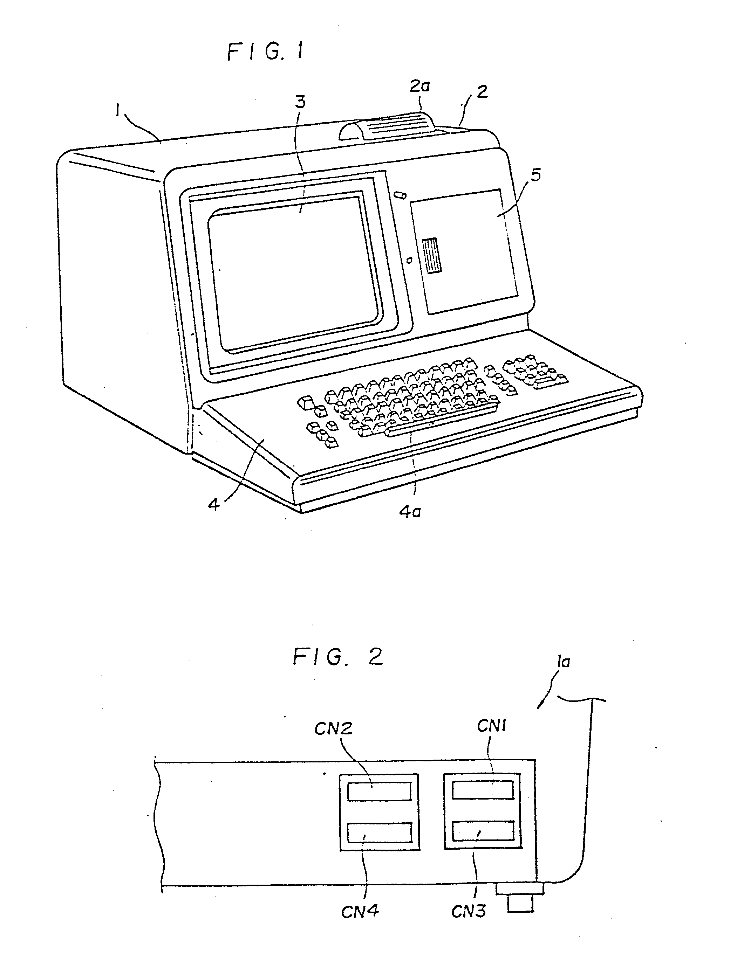

Computers have recently made headway in a variety of fields, and desktop computers in particular find wide use owing to their simplicity and low expense. By way of example, as shown in Fig. 1, a desktop computer for creating NC (numerical control) programs includes a main body 1 having an upper side provided with a printer 2 and a front side provided with a CRT display device 3. Disposed in front of the CRT display 3 is an operator's panel 4 on which there are provided an array of keys 4a such as character keys, numeric keys and function keys. Disposed at the side of the CRT display 3 is a magnetic storage device 5 such as a floppy disk. Numeral 2a denotes a recording paper on which printing is performed by the printer 2.

A microprocessor and memory are incorporated within the main body 1. The processor executes processing on the basis of a basic control program stored in the memory. Instructions and the results of processing are displayed on the CRT display device 3.

The processor executes prescribed processing based on commands, data and the like entered from the operator's panel 4, creates an NC program (part program), prints out the program via the printer 2 and stores the program via the magnetic storage device 5. A desktop computer of this kind comes equipped with the minimum necessary instrumentation owing to limitations imposed by system construction and cost. Therefore, in order to carry out a greater amount of processing as well as processing which is more sophisticated, expansion of memory is required, as by connecting a magnetic bubble memory or magnetic cassette tape device. Furthermore, depending upon the object of processing, an external printer and a paper tape reader/puncher/printer may also be required. It is also required that the NC unit and the like be connected online.

These pieces of external equipment are acquired by the user separately of the desktop computer according to the processing which the user himself requires to be performed. The desktop computer is therefore provided with connectors. Specifically, as shown in Fig. 2, a plurality (four in the illustration) of connectors CN1 through CN4 are provided at the lower portion of the main body 1 on its back side 1a. The arrangement is such that cables belonging to the external equipment are connected to these connectors so that the external equipment can be connected to the processor bus via the connectors and interface circuits provided for corresponding ones of the connectors.

When an arbitrary piece of external equipment is connected to a connector in the conventional arrangement, the processor of the main body cannot distinguish what the connected equipment is. Accordingly, in the prior art, each of the connectors CN1 through CN4 is devoted to a specific piece of external equipment so that the processor may perform an exchange of data with the equipment at a predetermined data transmission rate and in a prescribed transfer format without recognizing the piece of equipment connected thereto. As an example, the connector CN1 may be prescribed for a paper tape reader/puncher/printer, the connector CN2 for a magnetic cassette type, the connector CN3 for an XY plotter and the connector CN4 for a tablet, the oscillation frequency of a baud rate oscillator incorporated within the interface circuit provided for each connector is fixed according to the piece of external equipment to be connected to the connector, and an exchange of data is performed by determining the format configuration of data input and output via a particular connector according to the piece of external equipment connected to the connector.

However, with the conventional arrangement of this type, pieces of external equipment other than those mentioned cannot be connected to the connectors, and difficulty is involved in realizing more sophisticated and higer quality processing.  In addition, a system cannot be constructed by connecting a printer in one's possession instead of the XY plotter, or by connecting a magnetic bubble memory in one's possession instead of the magnetic cassete tape device.  In other words, equipment already possessed cannot be connected, so that one must specially purchase the piece of external equipment that is connectable.  The conventional arrangement is thus disadvantageous in that there is a lack of flexibility.  Similarly, since plural pieces of the same kind of equipment (e.g., XY plotters) cannot be connected, difficulties are involved in speeding up data processing.

For the above reasons, it has been contemplated to provide the main body 1 with a number of connectors and interface circuits capable of dealing with equipment of all kinds.  However, this involves such drawbacks as higher cost and more complicated control of the processor.

Accordingly, an object of the present invention is to provide a data transfer control method which, when any piece of external equipment is connected to a connector, enables a processor to recognize the connected equipment and perform a data transfer in conformance with the connected equipment.

Another object of the present invention is to provide a data transfer control method whereby a data transfer with a piece of external equipment connected to a connector can be performed based on a data transmission rate and data transfer format which conform to the piece of external equipment.

Still another object of the present invention is to provide a data transfer control method whereby a data transmission rate and a data transfer format, e.g., the configuration of a stop bit, can be changed with ease depending upon a piece of external equipment to be connected to a connector.

A further object of the present invention is to provide a data transfer control method wherein a correlation between a connector and a piece of external equipment to be connected to the connector, a data transmission rate and a stop bit configuration for the piece of equipment are stored in advance, and the stored information is used to recognize the piece of external equipment connected to the connector, as well as the data transmission rate and stop bit configuration.

A yet further object of the present invention is to provide a data transfer control method wherein once a correlation between a connector and a piece of external equipment to be connected to the connector, the data transmission rate and stop bit configuration are set, it is unnecessary to set these data anew until a connection relationship is changed.

Disclosure of the Invention

The present invention provides a data transfer control method for performing data input and output via an interface between an apparatus having a processor, and a piece of external equipment connected to a connector belonging to the apparatus. The data trans-transfer control method has a step of entering and storing beforehand, for each and every connector, a correlation between the connector and a piece of external equipment to be connected to the connector, a data transmission rate and a stop bit configuration which are necessary when an exchange of data is performed between the piece of external equipment and the processor, a step of recognizing the connector of a piece of external equipment which is to perform a data exchange with the processor by using the stored information and applying data transmission rate information and a stop-bit configuration as inputs to an interface circuit incorporated within the apparatus and connected to the connector, and a step of generating, by a baud rate generator incorporated within the interface circuit, pulses having a frequency in accordance with the applied data transmission rate information, performing a data transfer in synchronism with the pulses, and inserting a stop bit in data to be transmitted on the basis of the stop bit configuration or removing a stop bit from data which has been transferred and applying the stop bit to the processor as an input.

According to the present invention, any piece of external equipment can be connected to a connector, and data can be transferred correctly in the data format and at the data transmission rate suited to the piece of external equipment.

Brief Description of the Drawings

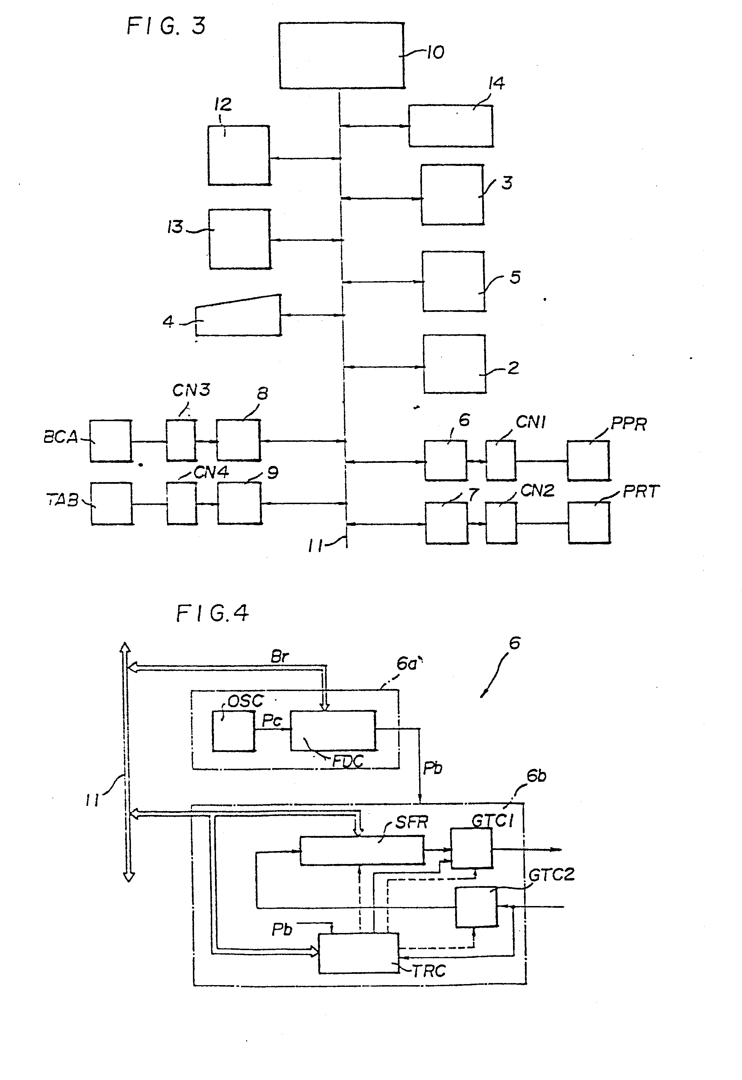

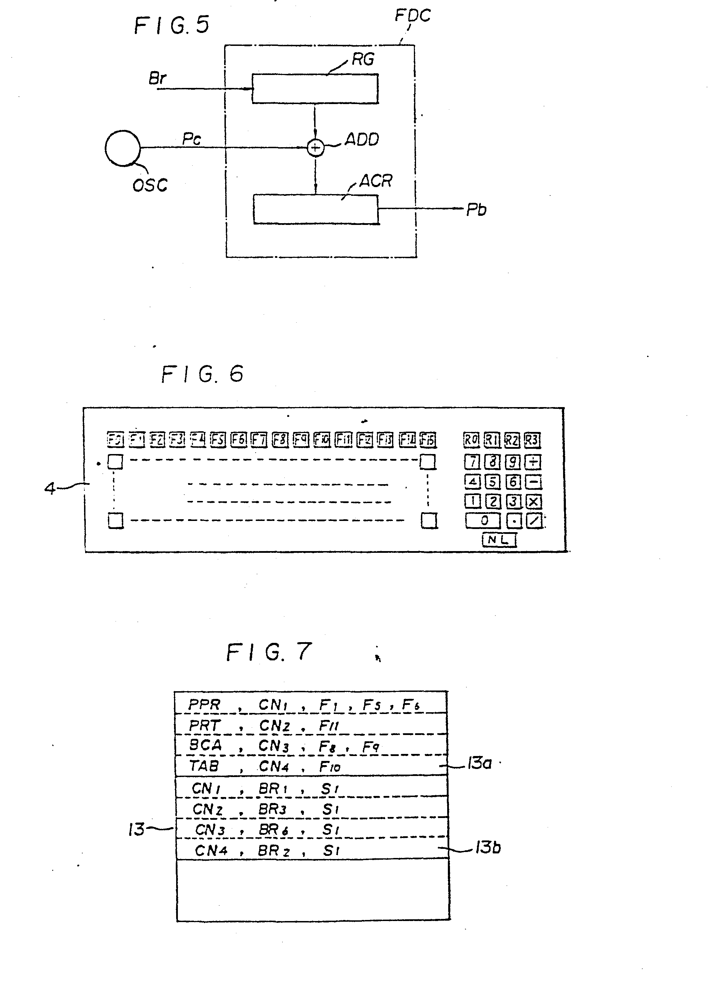

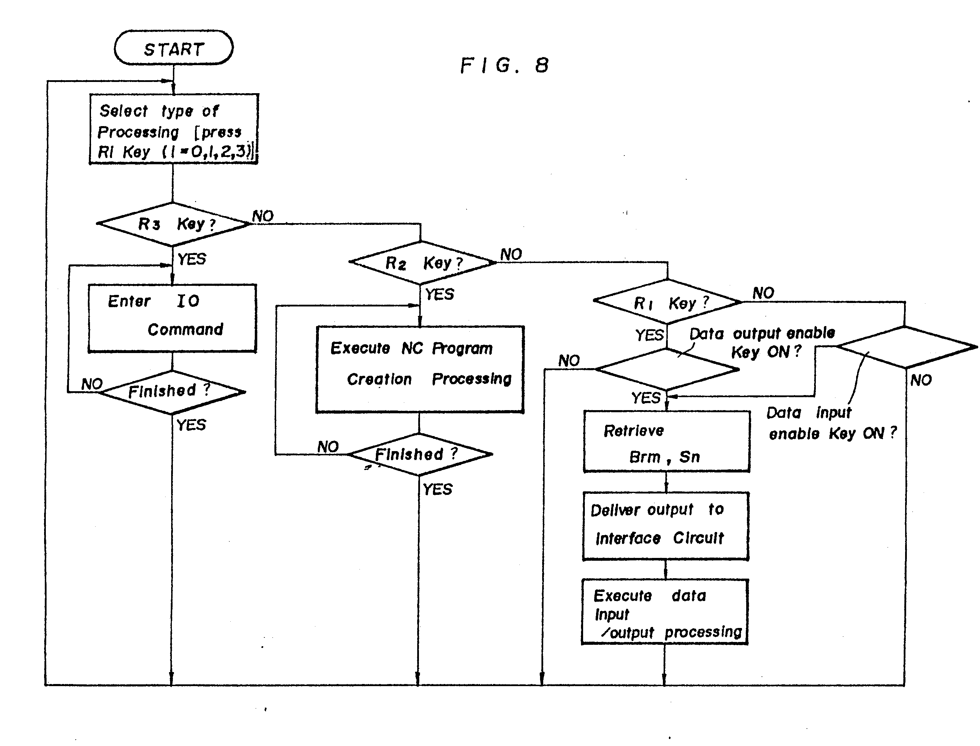

Fig. 1 is a view showing the construction of a common desktop computer, Fig. 2 is a view showing an arrangement of connectors in Fig. 1, Fig. 3 is a block diagram of a system to which the present invention can be applied, Fig. 4 is a block diagram of an interface circuit for practicing the present invention, Fig. 5 shows a specific example of a baud rate generator incorporated within the interface circuit, Fig. 6 is a view illustrating an arrangement of keys on an operator's panel shown in Fig. 3, Fig. 7 is a view for describing an example of stored data according to the present invention, and Fig. 8 is a flowchart of processing for data transfer according to the present invention.

Best Mode for Carrying Out the Invention

Fig. 3 is a block diagram of a system to which the present invention can be applied; portions identical with those shown in Figs. 1 and 2 are designated by like symbols. Numerals 6, 7, 8 and 9 denote identically constructed interface circuits, described below, the interface circuits being connected to respective connectors CN1 through CN4 (Fig. 2), respectively. Numeral 10 denotes a processor such as an arithmetic circuit, 12 a read-only memory (ROM) which stores a basic control program, and 13 a randon-access memory (RAM) for storing the results of calculations performed by the processor 10, data entered from the operator's panel 4, and an application program read out of the magnetic storage device 5. Numeral 14 designates a magnetic bubble memory which, when power is cut off, stores data relating to a connection relationship between a connector and a piece of external equipment, the data transmission rate of each interface, and a stop bit configuration, these being described below. Numeral 11 represents an address data bus for interconnecting the processor 10, ROM 12, RAM 13, magnetic bubble memory 14, operator's panel 4, display 3, printer 2, magnetic storage device 5 and interface circuits 6, 7, 8, 9. We shall assume that a paper tape reader/puncher/printer PPR, an external printer PRT, a bubble memory cassette BCA, and a table device TAB are connected to the connectors $CN_1$, $CN_2$, $CN_3$ and $CN_4$, respectively.

As shown in Fig. 4, each interface circuit has a baud rate generator 6a and an interface main body 6b. The baud rate generator 6a has an oscillator OSC for generating high speed pulses Pc of a fixed period, and a pulse generator circuit FDC for generating pulses Pb of a frequency corresponding to a data transmission rate (baud rate) $B_r$ input thereto. Fig. 5 is a specific example of the baud rate generator 6a. The pulse generator circuit FDC has a register RG in which the baud rate (a digital value) Br is set, an accumulator ACR, and an adder ADD.  Whenever the oscillator OSC generates the pulse Pc, the adder ADD adds the baud rate Br, which has been stored in the register RG, and the content of the accumulator ACR, with the result of the addition being stored in the accumulator ACR.  Accordingly, if the accumulator ACR is composed of an n-stage binary register and the frequency of the pulses Pc is F, then the accumulator ACR will generate overflow pulses Pb having a frequency $F_b$ indicated by the following equation:

$$F_b = Br \cdot F/2^n$$

If we assume that $F=2^n$ holds in the above equation, then the frequency $F_b$ of the overflow pulses Pb will be exactly the commanded baud rate $B_r$.

The interface main body 6b includes a shift register SFR having a parallel write/serial read (parallel-serial conversion) capability as well as a serial write/parallel read (serial-parallel conversion) capability, gate circuits GTC1, GTC2, and a transmission control unit TRC for generating a gate control signal, a strobe signal, and the like.  The serial writing and serial reading of data to and from the shift register SFR are performed in synchronism with the pulses Pb generated by the baud rate generator 6a.

Data transfer processing according to the present invention will now be described in conjunction with the flowchart of Fig. 8.

According to the present invention, the following are entered from the operator's panel 4 and stored in the RAM 13 prior to data processing: a correlation between the connectors CN1 through CN4 and pieces of external equipment to be connected to these connectors, a correlation between a plurality of function keys F0, F1, F2 ... F15 (see Fig. 6) provided on the operator's panel 4 and input/output functions of the pieces of external equipment connected to the connectors, data transmission rate, and stop bit configuration (the foregoing are referred to generically as "IO" commands). More specifically, at the beginning of operation, a display calling for selection of the type of processing appears on the display device 3. The operator responds by entering the type of processing from the operator's panel 4 (Fig. 6). For example, the display 3 will call for the operator to press an "R0" key for input processing (data input from external equipment), an "R1" key for output processing (data output to external equipment), an "R2" key for run processing (execution of a loaded program), and an "R3" key for IO command input processing. The operator selects the kind of processing by pressing the corresponding key (R0~R3 keys) on the operator's panel 4.

When the operator presses the "R3" key to select IO command input processing, the processor 10 permits a correlation as well as transfer control information to be entered as an IO command from the operator's panel 4.

An IO command takes on a format of the following kind and is entered from the operator's panel by the operator in accordance with such format:

IO name, CNi, [Fj[, Fk [, Fm]]] [, BRm] [, Sn] NL

In the above, "name" refers to the name of the piece of external equipment to be connected, for which the following abbreviations are used:

PPR (paper tape reader/puncher/printer), BCA (cassette device/bubble memory cassette), PRT (external printer), XYP (XY plotter), TAB (tablet device), NC (NC unit), and AUX (miscellaneous).

Further, "CNi" represents the number (i=1~4) of the connector for connecting the device designated by "name" above, "Fj" is the number of the function key for enabling a data input from the external equipment connected to the connector CNi, "Fk" stands for the number of the function key for enabling a data output to the external equipment connected to the connector CNi, and "Fm" represents the number of the function key for enabling a print out to the external equipment connected to the connector CNi. The function of the function keys is as set forth below. Specifically, the processor 10 is capable of accepting data from a piece of external equipment corresponding to a predetermined function key, or of effecting an output of data to the piece of external equipment, or of effecting a print out of data to the piece of external equipment only when the predetermined function key is pressed. For example, if the function key F8 is appointed as a key for enabling a data input from the bubble memory cassette BCA connected to the connector CN3, then the processor 10 will be capable of reading data from the bubble memory cassette BCA whenever necessary providing that the function key F8 is in the pressed state. Further, if the function key F11 is appointed as a key for enabling a data output to the external printer PRT connected to the connector CN2, then the processor 10 will be capable of effecting an output of data to the external printer PRT whenever necessary providing that the function key F11 is in the pressed state.

In the aforementioned IO command, "BRm" (m=0~10) is code data indicating the baud rate, wherein m=50 corresponds to 50 baud, m=1 corresponds to 100 baud, and so on through m=10, which corresponds to 9600 baud. "Sn" (n=0~2) is a code indicating the form of a stop bit, wherein n=0 indicates a stop bit length of one bit, n=1 a stop bit length of two bits, and n=2 a stop bit length of 1.5 bits. "NL" is a code for indicating the end of a command and is entered by operating a key (NL key) for input designation. An IO command entered by the operator is transmitted as connection information to the processor 10 and stored in the RAM 13 via the bus 11.

Fig. 7 is an example of IO commands stored in the RAM 13. Stored in a first storage area 13a of the RAM 13 are correlations among the pieces of external equipment, connectors and function keys, and stored in a second storage area 13b are correlations among connectors, data transmission rates and stop bits. More specifically, the illustration shows that the operator has entered the four IO commands shown below from the operator's panel 4:

IO PPR, CN1, F1, F5, F6, BR1, S1, NL

IO PRT, CN2, F11, BR3, S1, NL

IO BCA, CN3, F8, F9, BR6, S1, NL

IO TAB, CN4, F10, BR2, S1, NL

This information is utilized when the processor 10 performs a data exchange with the external equipment based on a designation from the operator's panel 4 or from the program.

When entry of IO commands through the foregoing steps has been completed, the system returns to the initial state. In this state the operator presses the R0 key, R1 key or R2 key to perform the particular processing.

By way of example, the previously loaded program is run if the R2 key is pressed. If the loaded program is an NC tape creation program, then the processor 10 creates an NC program (part program) in accordance with data entered from the operator's panel and causes the display device 3 to display a machining graphic based on the created NC data or the NC data itself for confirmation by the operator. Thereafter, data entry, NC program creation and display are repeated in successive fashion to eventually store the created NC program in the RAM 13.

If the R0 key or R1 key on the operator's panel 4 is pressed, the processor 10 executes the following input/output processing. We shall assume that data output processing is requested by pressing the R1 key.

The processor 10 retrieves a piece of external equipment for data output by using the information stored in the first storage area 13a of the RAM 13. Since the external equipment available for data output are the paper tape reader/puncher/printer PPR connected to the connector CN1, the external printer PRT connected to the connector CN2, and the bubble memory cassette BCA connected to the connector CN3, the processor 10 first determines whether the key for enabling a data output to the paper tape reader/puncher/printer PPR, namely the function key F5, is being pressed. ON shall refer to a case where a key is pressed, and OFF shall refer to a case where a key is not pressed.

If the function key F5 is ON, then the processor 10 takes the connector CN1 as a keyword to read the data transmission rate information BR1 and stop bit information S1 out of the second storage area 13b of the RAM 13, and applies the baud rate 100 (baud) corresponding to the data transmission rate information BR1, as well as the stop bit information S1, to the interface circuit 6 (Fig. 3) connected to the connector $CN_1$. The baud rate 100 (baud) enters the baud rate generator 6a, and the stop bit information S1 enters the transmission control unit TRC. As a result, the baud rate generator 6a generates pulses Pb having a frequency of 100 (baud), as set forth above.

Thereafter, the processor 10 delivers one character of parallel data (e.g., eight bits) to the interface circuit 6, whereby the parallel data are temporarily stored in the shift regster SFR (Fig. 4) of the interface circuit 6. When the data have been set in the shift register SFR, the transmission control unit 6b transmits, via the gate circuit GTC1, a signal consisting of continuous "1"s or "0"s, for a period of time (e.g., $2 \cdot T$ if the baud rate period is T for stop bit information S1) decided by the stop bit information which has already been applied as an input thereto. After this transmission, the data from the shift register SFR are transmitted to the paper tape reader/puncher/printer PPR via the gate circuit GTC1 serially one bit at a time in synchronism with the pulses Pb generated by the baud rate generator 6a. Following this eight-bit transmission, a signal consisting of continuous "1"s is applied for a period of time $2 \cdot T$ and the transmission of one character of data ends. After this is accomplished, the setting of the parallel data in the shift register SFR and the serial tranmission of an eight-bit character are repeated until the delivery of all data to the paper tape reader/puncher/printer PPR is completed. This will conclude the data output processing.

If the function key F5 for the paper tape reader/puncher/printer PPR is OFF, on the other hand, the processor 10 determines whether the key for enabling an output of data to the external printer PRT, namely the function key F11, is ON or OFF.

If the function key F11 is ON, then the processor 10 takes the connector CN2, to which the external printer PRT is connected, as a keyword to read the data transmission rate $BR_3$ and stop bit information $S_1$ out of the second storage area 13b of the RAM 13, and applies these to the interface circuit 6 connected to the connector CN2. The processor follows this by performing an output of data to the external printer PRT in a manner similar to that described above.

If the function key F11 is OFF, then the processor 10 determines whether the key for enabling an output of data to the bubble cassette memory BCA, namely the function key F9, is ON or OFF. If it is ON, the processor executes an output of data to the bubble memory cassette BCA via the interface circuit 8 through processing similar to that set forth above.

It should be noted that the processor 10 ends data output processing immediately if all of the function

-17-

keys F5, F11, F9 are OFF.

If the R0 key on the operator's panel 4 is pressed to request data input processing, the processor 10 uses the information stored in the first storage area 13a to retrieve a piece of external equipment for data input. The external equipment available for data input are the paper tape reader/puncher/printer PPR connected to the connector CN1, the bubble memory cassette BCA connected to the connector CN3, and the tablet TAB connected to the connector CN4.

The processor 10 then determines whether the key for enabling a data input from the paper tape reader/puncher/printer PPR, namely the function key F1, is ON or OFF.

If the function key F1 is ON, the processor 10 takes the connector CN1 as a keyword to read the data transmission rate BR1 and stop code information S1 out of the second storage area 13b of the RAM 13, and applies these to the interface 6 as inputs thereto.

Thereafter, when the paper tape reader/puncher/printer PPR provides the interface circuit 6 with a transmission of serial data to which a stop bit of a predetermined length (two bits) has been attached before and after the data, the transmission control unit TRC of this interface circuit considers the data from the third bit onward as being the input data by relying upon the stop bit information S1 and opens the gate circuit GTC2 starting from the third bit to store the input data in the shift register SFR in serial fashion in synchronism with the pulses Pb generated by the baud rate generator 6a. Since the stop bits of the predetermined number (two bits) have been affixed to the end of the input data, the end of one character of data is discriminated based on the stop bits, whereby the gate circuit GTC2 is closed. After one character of input data is set in the shift register SFR, the processor 10 generates, on an address bus and control bus, an address signal and read signal for the interface circuit 6, respectively. When this occurs, the eight-bit input data which has been stored in the shift register SFR is delivered as an output on a data bus and is accepted by the processor 10. This is followed by repeating the foregoing processing until the acceptance of all input data from the paper tape reader/puncher/printer ends.

If the function key Fl is OFF, the processor 10 determines whether the key for enabling an input of data from the bubble memory cassette BCA, namely the function key F8, is ON or OFF. If if is ON, data input processing similar to the foregoing is carried out. If the function key F8 also is OFF, then the processor 10 determines whether the key for enabling an input of data from the tablet device TAB, namely the function key Fl0, is ON or OFF. If it is ON, then data is read out of the tablet device. If the function key Fl0 also is OFF, then the processor 10 immediately ends the input processing.

It should be noted that IO command data are read out of the RAM 13 and stored in the magnetic bubble memory 14 (Fig. 3) at a suitable timing to preserve the data even in the event of a power cut-off. Therefore, once the IO command data have been entered, the data need be entered no longer provided that there is no change in the connection relationship between a connector and a piece of external equipment.

Industrial Applicability

According to the present invention as described above, a correlation between a piece of external equipment and a connector, as well as a data transmission rate and stop bit configuration necessary for an exchange of data with the piece of external equipment, is stored in memory beforehand. Therefore, even though an arbitrary piece of external equipment may be connected to a connector, the processor is capable of recognizing the equipment and of exchanging data with the equipment correctly at the data transmission rate and in the data transfer format suited to the equipment. Accordingly, the present invention is well-suited for application to a system comprising a processor and plural pieces of external equipment.

CLAIMS:

1. A data transfer control method for performing data input and output via an interface between an apparatus having a processor, and a piece of external equipment connected to a connector belonging to said apparatus, characterized by having a step of previously entering from an operator's panel and storing in memory information which includes at least a correlation between the connector and a piece of external equipment to be connected to said connector, and a data transmission rate necessary when an exchange of data is performed between said piece of external equipment and the processor, a step of recognizing the connector of a piece of external equipment which is to perform a data exchange with the processor by using said stored information and applying a data transmission rate as an input to an interface circuit connected to said connector, and a step of generating, by a baud rate generator incorporated within the interface circuit, pulses having a frequency in accordance with said applied data transmission rate, and performing a data exchange between the processor and piece of external equipment in synchronism with said pulses.

2. A data transfer control method according to claim 1, characterized in that said apparatus has two or more connectors.

3. A data transfer control method according to claim 1, characterized in that said information includes stop

bit information, and by having a step of providing data which is to be delivered as an output to a piece of external equipment with stop bits of a number designated by said stop bit information, removing, from data received as an input from a piece of external equipment, stop bits of a number designated by the stop bit information, and applying these stop bits to the processor as an input thereto.

4. A data transfer control method according to claim 3, characterized in that said information is stored in a non-volatile memory.

5. A data transfer control method according to claim 1, characterized in that said information includes a correlation between a pieces of external equipment and function keys on the operator's panel, wherein when a data input is requested, the processor accepts data from a data input unit, from among the pieces of external equipment, for which the function key is ON.

6. A data transfer control method according to claim 1, characterized in that said information includes a correlation between a pieces of external equipment and function keys on the operator's panel, wherein when a data output is requested, the processor outputs data to a data output unit, from among the pieces of external equipment, for which the function key is ON.

F I G. 1

F I G. 2

0139022

FIG. 3

FIG.4

FIG. 5

FDC
Br → RG
OSC ○ — Pc → ⊕ ADD
ACR → Pb

FIG. 6

4 —

F0 F1 F2 F3 F4 F5 F6 F7 F8 F9 F10 F11 F12 F13 F14 F15    R0 R1 R2 R3
7 8 9 +
4 5 6 −
1 2 3 ×
0 . /
NL

FIG. 7

| PPR | , CN1 , $F_1$ , $F_5$ , $F_6$ |
| PRT | , CN2 , $F_{11}$ |
| BCA | , CN3 , $F_8$ , $F_9$ |
| TAB | , CN4 , $F_{10}$ |  13a
| CN1 | , BR1 , S1 |
| CN2 | , BR3 , S1 |
| CN3 | , BR6 , S1 |  13
| CN4 | , BR2 , S1 |  13b

FIG. 8

0139022

4/4

# INTERNATIONAL SEARCH REPORT

**I. CLASSIFICATION OF SUBJECT MATTER (if several classification symbols apply, indicate all)**

According to International Patent Classification (IPC) or to both National Classification and IPC

Int. Cl$^3$ G06F 3/00

**II. FIELDS SEARCHED**

| Minimum Documentation Searched | |
|---|---|
| Classification System | Classification Symbols |
| IPC | G06F 3/00 - 3/04, 15/00 - 15/16 |

Documentation Searched other than Minimum Documentation
to the Extent that such Documents are Included in the Fields Searched

Kokai Jitsuyo Shinan Koho 1971 - 1984

**III. DOCUMENTS CONSIDERED TO BE RELEVANT**

| Category* | Citation of Document, with indication, where appropriate, of the relevant passages | Relevant to Claim No. |
|---|---|---|
| X | JP, A, 57-209522 (Fujitsu Ltd.), 22 December, 1982 (22. 12. 82), Columns 1 to 5 | 1 - 6 |
| X | JP, A, 57-178523 (Mitsubishi Electric Corp.), 2 November, 1982 (02. 11. 82), Columns 1 to 5 | 1 - 6 |
| X | JP, A, 57-106932 (Fujitsu Ltd.), 3 July, 1982 (03. 07. 82), Columns 1 to 12 | 1 - 6 |
| X | JP, A, 56-11532 (Yokogawa Electric Works, Ltd.), 4 February, 1981 (04. 02. 81), Columns 1 to 5 | 1 - 6 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 13, 1984 (13.06.84) | July 2, 1984 (02.07.84) |
| International Searching Authority | Signature of Authorized Officer |
| Japanese Patent Office | |

Form PCT/ISA/210 (second sheet) (October 1981)